# EUROPÄISCHE PATENTSCHRIFT

(11) **EP 1 805 275 B1**
(45) Veröffentlichungstag und Bekanntmachung des Hinweises auf die Patenterteilung: **17.04.2013**
(21) Anmeldenummer: 05791577.9
(22) Anmeldetag: 12.10.2005
(51) Int. Cl.: C09J 7/02, A47G 27/04

(54) **VERWENDUNG EINER SELBSTKLEBEFOLIE MIT LUFTKANÄLEN UND/ODER LUFTKAMMERN ZUR VERKLEBUNG EINES FUSSBODENBELAGS**
USE OF A SELF-ADHESIVE FILM COMPRISING AIR CHANNELS AND/OR AIR CHAMBERS FOR INSTALLING A FLOOR COVERING
UTILISATION D'UNE FEUILLE AUTOCOLLANTE DOTEE DE CONDUITS D'AIR ET/OU DE CHAMBRES A AIR POUR l'INSTALLATION DE REVETEMENT DE SOL

(30) Priorität: 26.10.2004 DE 102004052022
(43) Veröffentlichungstag der Anmeldung: 11.07.2007
(73) Patentinhaber: Uzin Tyro AG, 6374 Buochs (CH)
(72) Erfinder: SIEBER, Marco, CH-6048 Horw (CH); SIEBER, Reto, CH-6019 Sigigen (CH)
(74) Vertreter: Spranger, Stephan
(86) Internationale Anmeldenummer: PCT/EP2005/010960
(87) Internationale Veröffentlichungsnummer: WO 2006/045435

(56) Entgegenhaltungen:
- WO-A-01/53069
- WO-A-02/16523
- DE-A1- 10 247 046

## Beschreibung

Die Erfindung betrifft die Verwendung einer Selbstklebefolie zum Verkleben von flächigen, flexiblen Materialien, wie insbesondere Fußbodenbeläge, Teppiche, Folien, Plakate oder Textilien, gemäß dem Oberbegriff des Anspruchs 1.

Allgemein sind Selbstklebefolien zum flächigen Verlegen von Belägen wie Bodenbeläge oder Ähnlichem bekannt.

Es gibt verschiedene Möglichkeiten, flexible, flächige Materialien, wie beispielsweise einen PVC- oder CV-Bodenbelag auf einem Boden oder einer Treppe, zu befestigen. Neuere Methoden bestehen darin, Selbstklebefolien ausgerüstet mit Haftkleberbeschichtungen auf den beiden Oberflächen vollflächig auf den Boden aufzubringen. Der zu verlegende Bodenbelag wird dann auf der Oberseite der Selbstklebefolie aufgebracht.

Die Patentanmeldung PCT/EP01/08314 beschreibt Selbstklebefolien zum Verlegen von Fußbodenbelägen, wobei die Trägerschicht zumindest an ihrer unteren Oberfläche haftkleberverankernd ausgerüstet ist. EP0937761 A1 beschreibt beidseitig klebende Teppichverlegebänder deren beiden Seiten über die gesamte Fläche mit foggingfreien, druckempfindlichen Klebemassen ausgerüstet sind. Die Offenlegungsschrift DE 3041074 A1 beschreibt Klebebänder zur Verlegung von Bodenbelägen deren zum Untergrund hingewandten Klebeschicht Klebepunkte aufweist. Die zum verlegenden Bodenbelag gerichtete Seite dagegen ist vollflächig mit Haftklebstoff beschichtet. Die bekannten Klebefolien sind entweder permanent klebrig oder aber auch vom Boden abnehmbar.

Das Dokument WO 01/53069 A1 beschreibt ein doppelseitiges Klebematerial sowie ein Verfahren zu dessen Herstellung zum Verkleben von Bodenbelägen, insbesondere von Bodenbelägen mit rauem Bodenbelagsrücken, welches durch Vorsehen einer strukturierten Haftkleberbeschichtung an der dem Bodenbelag zugewandten Oberfläche einer dort vorgesehenen Haftkleberbeschichtung eine flächige Verklebung des unebenen Belagrückens ohne Hohlräume gewährleisten soll.

Das Dokument WO 02/16523 A1 beschreibt eine Selbstklebefolie zum Verkleben eines Fußbodenbelags auf einem Fußboden, wobei zur Erreichung einer Wasserdampfdurchlässigkeit dieser Selbstklebefolie dort eine Trägerschicht und/oder eine Haftkleberbeschichtung perforiert sein kann.

Das Dokument DE 102 47 046 A1 offenbart eine Selbstklebefolie zum Verkleben eines Fußbodenbelags auf einem Fußboden mit einer Trägerschicht, welche an einer oberen, dem Fußbodenbelag zugewandten Oberfläche und an einer unteren, dem Fußboden zugewandten Oberfläche mit einer Haftkleberbeschichtung beschichtet ist. Zumindest die Haftkleberbeschichtung der oberen Oberfläche weist einen entfernbaren Abdeckfilm auf, welcher rutschhemmend ausgestaltet ist, wobei die rutschhemmende Ausgestaltung beispielsweise durch Perforationsöffnungen in der entfernbaren Abdeckschicht realisierbar ist. Zum Verkleben eines Fußbodenbelags wird diese Abdeckschicht entfernt.

Die bislang bekannten Selbstklebefolien sind teilweise entweder wasserdampfdurchlässig oder wasserdampf-offen, aber stets ist die zum verlegenden Bodenbelag hingewandte Seite der Klebefolien vollflächig ausgerüstet, d.h. vollflächig und gleichmäßig mit Haftkleber beschichtet. Diese Art von Klebebändern weist meh-rere Nachteile bei der Verlegung auf. Insbesondere bei der Verlegung von flexiblen, flächigen Bodenbelägen wie PVC-Bahnen oder CV-Bahnen mit nahezu glatten Rücken gelingt es kaum, den Bodenbelag ohne Lufteinschlüsse auf die Oberseite der bereits auf den Boden aufgebrachten Selbstklebefolie aufzubringen. Die zwischen Selbstklebefolie und Bodenbelag eingeschlossenen Luftpolster können nicht entweichen da die Selbstklebefolien vollflächig mit Klebstoff ausgerüstet sind und die gebildeten Luftpolster hermetisch eingeschlossen sind. Beim Begehen auf dem verlegten Bodenbelag werden die Luftpolster komprimiert und zusammengeschoben und es bilden sich deutlich sichtbare Blasen, die je nach Luftdurchlässigkeit des Bodenbelags mehr oder weniger dauerhaft verbleiben. Ein weiterer Nachteil der vollflächigen mit druckempfindlicher Haftkleber-Ausrüstung der zum Bodenbelag hingewandten Seite der Selbstklebefolien macht sich bei der Verlegung der Bodenbeläge bemerkbar. Sobald der Bodenbelag einmal Kontakt hat mit der druckempfindlichen Selbstklebefolie klebt er fest und lässt sich nahezu nicht mehr von der Selbstklebefolie entfernen. Ein Korrigieren wird unmöglich. Somit ergibt sich die Problematik bei der Verlegung von flexiblen Materialien auf den bislang bekannten Selbstklebefolien, dass ein spannungs- und blasenfreies Verlegen von flächigen Produkten nicht möglich war.

Die Aufgabe der Erfindung ist daher die Verwendung einer Selbstklebefolie, welche die Nachteile des Stands der Technik überwindet und die blasen- und spannungsfreie Verlegung von flächigen, flexiblen Materialien wie Bodenbeläge, z.B. PVC-, CV-, Polyolefin- oder Teppichbeläge, Folien, Plakate oder Textilien bei einfacher Handhabung ermöglicht

Die Aufgabe wird erfindungsgemäß durch die Verwendung einer Selbstklebefolie mit den Merkmalen gemäß Anspruch 1 gelöst.

Bevorzugte Ausführungsformen der Erfindung sind in den Unteransprüchen definiert.

Erfindungsgemäß wird die Selbstklebefolie verwendet zum Verkleben eines Fußbodenbelags, insbesondere eines Teppichbodens, auf einem Fußboden, insbesondere Parkett, bzw. auf einer Treppe, oder zum Verkleben von Folien, Plakate oder Textilien, mit einer Trägerschicht aus Kunststofffolie, welche an einer oberen, dem Fußbodenbelag zugewandten Oberfläche und an einer unteren, dem Untergrund, insbesondere dem Fußboden bzw. der Treppe, zugewandten Oberfläche mit einer Haftkleberbeschichtung beschichtet ist, ist zumindest an ihrer oberen Oberfläche in einer Ebene, welche senkrecht zur Dicke der Selbstklebefolie verläuft, mit Luftkanälen und/oder Luftkammern zum Bodenbelag, Folie, Plakat oder Textil hin zwischen der Selbstklebefolie und dem Bodenbelag, Folie, Plakat oder Textil ausgebildet.

Die erfindungsgemäß zu verwendende Selbstklebefolie dient insbesondere zum Verkleben eines Fußbodenbelags auf einem Fußboden bzw. auf einer Treppe. Der Fußboden kann dabei insbesondere Parkett, Terrazzo, Steinfußboden, Estrich, Holzboden, Teppichboden oder ähnliches sein. Die Selbstklebefolie weist eine Trägerschicht aus Kunststofffolie auf, welche an einer oberen, dem Fußbodenbelag zugewandten Oberfläche und an einer unteren, dem Fußboden zugewandten Oberfläche beschichtet ist. Die erfindungsgemäße Selbstklebefolie ist bevorzugt mit einer Mindestbreite von 150 mm zum großflächigen Abdecken des mit dem Fußbodenbelag zu belegenden Fußbodens bzw. der Treppe ausgebildet, wobei die Trägerschicht zumindest an ihrer oberen Oberfläche derart uneben bzw. rau ausgebildet ist, dass definierte Luftkammern und/oder Luftkanäle zwischen Selbstklebefolie und Bodenbelag verbleiben.

Die Erfindung besteht darin, dass zumindest die obere, dem Fußbodenbelag zugewandten Oberfläche der Selbstldebefolie mit einer Haftklebeschicht ausgerüstet ist, dadurch gekennzeichnet, dass definierte Luftkammern und/oder Luftkanäle vorgesehen sind, die nach der Verlegung des Bodenbelags erhalten bleiben oder weitgehend erhalten bleiben. Vorzugsweise bleiben die Luftkammern und/oder Luftkanäle mindestens solange erhalten wie zwischen Selbstklebefolie und Bodenbelag eingeschlossene Luft zum Ausgasen benötigt, besonders bevorzugt bleiben sie permanent erhalten.

Die Luftkanäle und/oder Luftkammern können bevorzugt durch erste Bereiche, d.h. Aussparungen, in der Haftklebstoffschicht oder stellenweise dünnere Schichtstärke der Haftklebstoffschicht erzeugt werden. Diese Luftkanäle und/oder Luftkammern können dabei bevorzugt parallel zur Bahnrichtung der Selbstklebefolien oder aber auch senkrecht oder im beliebigen Winkel schräg zur Bahnrichtung verlaufen. Zweite Bereiche weisen nach wie vor die normale, dickere Haftkleberbeschichtung auf. Erfindungsgemäß bevorzugt sind die Luftkanäle lang gezogen, bevorzugt ohne Unterbruch.

Die Luftkanäle und/oder Luftkammern können von einander isoliert oder bevorzugt miteinander verbunden sein.

Erfindungsgemäß bevorzugt ist die Breite der Luftkanäle höchstens 15 mm, vorzugsweise kleiner 5 mm, besonders bevorzugt kleiner 3 mm und ganz besonders bevorzugt kleiner 1.5 mm oder am bevorzugten kleiner 1 mm.

Die Luftkammern können durch Aussparungen in der Haftklebstoffbeschichtung oder durch stellenweise dünnere Schichtstärke der Haftklebstoffbeschichtung erzeugt werden.

Die Luftkammern können eine beliebige Form haben, vorzugsweise sind sie quadratisch, rechteckig, dreieckig, trapezförmig, rautenförmig oder aber kreisförmig oder oval. Im Falle von mehrwinkligen Formen beträgt der Durchmesser, d.h. der kleinste Abstand zwischen Schwerpunkt der Ausparungsform und Ausparungsformkante, höchstens 10 mm, vorzugsweise kleiner 5 mm, besonders bevorzugt kleiner 3 mm und ganz besonders bevorzugt kleiner 1.0 mm oder am bevorzugten kleiner 0.5 mm.

Die Luftkammern haben die Aufgabe, die beim Verlegen des Bodenbelags zwischen Selbstklebefolie und Bodenbelag ausgebildete Luftpolster aufzunehmen ohne dass diese beim Begehen des Bodenbelags zu Blasen komprimiert werden. Die Luftkammern sind mindestens solange formstabil wie die eingeschlossene Luft zum Ausgasen benötigt.

Anstelle der oder zusätzlich zu den Luftkanälen und/oder Luftkammern durch unterschiedliche erste und zweite Bereiche ist zumindest die obere, dem Fußbodenbelag zugewandten Oberfläche der Selbstklebefolie bevorzugt mit einer Haftklebeschicht ausgerüstet, die dadurch gekennzeichnet ist, dass sie im wesentlichen uneben und rau gestaltet ist. Die Rauhigkeit dieser oberen Haftkleberschicht besteht mikroskopisch gesehen aus einer Hoch-Tief-Struktur. Die Distanz vom tief sten Punkt zum höchsten Punkt kann je nach gewünschter Luftaufnahne - Kapazität vergrößert oder verkleinert werden.

Erfindungsgemäß bevorzugt hat die Hoch-Tiefstruktur der oberen Oberfläche der Selbstklebefolie eine mittlere Rauhigkeit Ra von 1 - 300 µm, bevorzugt von 5 - 200 µm, besonders bevorzugt von 10 - 150 µm, ganz besonders bevorzugt von 15 - 100 µm und idealer weise von 20 - 75 µm. Die Rauhigkeit kann beispielsweise durch Zusatz von vergleichsweise groben Füllstoffen erzielt werden. Der durchschnittliche Korndurchmesser liegt dabei im Bereich von 0.1-fachen bis zur 10-fachen, bevorzugt im Bereich der 0.3-fachen bis 5-fachen, besonders bevorzugt im Bereich von 0.5-fachen bis 3-fachen Dicke der Haftklebeschicht der oberen Seite der Selbstklebefolie.

Durch die erfindungsgemäße Unebenheit der oberen, dem Fußbodenbelag zugewandten Oberfläche der Selbstklebefolie, die durch Luftkanäle und/oder Luftkammern und/oder Rauhigkeit erzeugt wird, liegen beim Verlegen des Bodenbelags Haftzentren vor. Diese erfindungsgemäßen Haftzentren ermöglichen ein spannungsfreies Einlegen und notfalls auch ein Aufnehmen des Bodenbelags vor einer signifikanten Druckbelastung, beispielsweise vor Begehung, ohne dass die Endklebkraft der Selbstklebefolie signifikant reduziert ist.

Die Selbstklebefolie kann gemäss einer bevorzugten Ausführungsform auch zumindest an der unteren Oberfläche haftkleberverankernd ausgerüstet sein. Die Kunststofffolie der Trägerschicht kann zumindest an ihrer unteren Oberfläche vorzugsweise koronisiert sein, sie kann weiterhin auch mit einer Primerbeschichtung versehen sein und/oder mitextrudierten Haftvermittler aufweisen. Geeignete Primer funktionieren dabei auch als Bremsschicht gegen den Durchgang von Additiven und/oder Weichmachern. Es ist auch möglich, den Primer der Haftkleberbeschichtung zumindest einer der Oberflächen zuzumischen. Die Selbstklebefolie kann, wie gesagt, zumindest an der unteren Oberfläche beim Herstellungsprozess mitextrudierten Haftvermittler zur Haftkleberverankerung aufweisen.

Erfindungsgemäß kann die haftkleberverankernde Oberfläche der Trägerschicht als Schicht ausgebildet sein und/oder die Trägerschicht selbst besteht aus haftkleberverankerndem Material.

Generell ist es möglich jede der oben beschriebenen Möglichkeiten der haftkleberverankernden Ausbildung zumindest an der unteren Oberfläche der Selbstklebefolie für sich zu verwirklichen oder zwei oder mehrere davon zu kombinieren, wobei die haftkleberverankernde Ausbildung zusätzlich auch zumindest der oberen Oberfläche möglich ist, falls die rückstandsfreie Wiederablösbarkeit der Selbstklebefolie sowohl vom Untergrund, Fußboden bzw. der Treppe als auch vom zu fixierenden Belag, beispielsweise Bodenbelag, Teppich oder Plakat.

Ferner kann die Trägerschicht bevorzugt so ausgebildet sein, dass sie zumindest einen Abschnitt als Bremsschicht gegen Durchgang von Additiven und/oder Weichmachern aufweist. Dabei kann die Bremsschicht gemäss einer besonders bevorzugten Ausführungsform der Erfindung im wesentlichen die haftkleberverankernde Oberfläche sein. Allgemein können die Additive und/oder Weichmacher aus den verwendeten Haftklebern der Selbstklebefolie selbst oder aus eventuell verwendeten Belägen, wie PVC, CV-Bodenbeläge oder PVC-Folien-Plakate herrühren. Es wird somit vermieden, dass es zu keiner negativen Veränderung der Eigenschaften der ursprünglich vorhandenen Haftkleberbeschichtung kommen kann. Somit ist sichergestellt, dass die erfindungsgemäße Selbstklebefolie über einen längeren Zeitraum ihre gewünschte Klebkraft beibehält und die Wiederablösbarkeit, insbesondere die rückstandsfreie Wiederabnehmbarkeit, nicht durch Veränderungen in den einzelnen Schichten der Selbstklebefolie verloren geht.

Vorteilhaft ist es ferner, die Trägerschicht zumindest an ihrer unteren Oberfläche im wesentlichen eben auszubilden. Ferner ist es vorteilhaft, die Haftkleberbeschichtung zumindest an der unteren Oberfläche im wesentlichen eben auszubilden. Die im wesentlichen ebene Ausbildung der unteren Oberfläche der Trägerschicht und/oder Haftkleberbeschichtung dient dabei der besonders zuverlässigen Verklebbarkeit der erfindungsgemäßen Selbstklebefolie, wobei die Vermeidung von Haftklebezentren, welche durch punktuell stärkere Haftung aufgrund von Unebenheiten auftreten, eine flächige Verankerung erreicht wird. Dies verbessert die Handhabbarkeit der erfindungsgemäßen Selbstklebefolie und trägt zur im wesentlichen rückstandsfreien Wiederablösbarkeit der erfindungsgemäßen Selbstklebefolie vom Untergrund bei.

Zur Erzielung einer besonders zuverlässigen und haltbaren Verklebung des Fußbodenbelags mittels der erfindungsgemäßen Selbstklebefolie bei gleichzeitig rückstandsfreier Wiederablösbarkeit vom Fußboden ist es des weiteren bevorzugt, dass die untere Oberfläche eine Haftkleberbeschichtung mit geringerer Haftstärke als die Haftstärke der Haftkleberbesichtung der oberen Oberfläche aufweist. Es können dazu auf jeder der beiden Oberflächen unterschiedliche Haftkleber oder auf jeder der Oberflächen jeweils der gleiche Haftkleber Verwendung finden.

In einer bevorzugten Ausführungsform der Erfindung wird die unterschiedliche Haftstärke bzw. Klebkraft der beiden Oberflächen der Haftkleberbeschichtung durch unterschiedliche mittlere Auftragsgewichte bewirkt, wobei die Oberfläche mit der größeren Haftstärke ein höheres mittleres Kleberauftragsgewicht aufweist.

Besonders bevorzugt ist eine Ausführungsform, bei welcher das mittlere Kleberauftragsgewicht im getrockneten Zustand zumindest auf der oberen Oberfläche im Bereich von 5 bis 250 g/m² , vorzugsweise zwischen 50 bis 150 g/m², und insbesondere zumindest auf der unteren Oberfläche von 5 bis 100 g/m2, insbesondere von 10 bis 80 g/m², liegt. Durch Wahl des Haftklebers und der Auftragsgewicht wird die Klebkraft der jeweiligen Haftkleberschicht bestimmt.

Als Haftkleber haben sich eine auf Acrylat basierende Dispersion, z.B. angereichert mit Harzen und mit darin enthaltenem UV- und Alterungsschutz bewährt, wobei auch jeder andere geeignete Haftkleber auf Dispersions- oder Lösungsmittelbasis oder auf Basis von UV-, elektronenstrahl- oder thermischen Vernetzung sowie auf Hotmeltbasis verwendbar ist, welcher insbesondere auch für Wasserdampf diffusionsfähig sein kann. Geeigneter Weise wählt man Haftkleber aus, die gegen den Fußboden wie auch gegen den Fußbodenbelag möglichst konstante Klebkraft über einen gewissen Zeitraum aufweisen. Bevorzugt ist die Haftkleberbeschichtung der unteren und/oder oberen Oberfläche vollflächig, sie kann jedoch auch abschnittsweise aufgebracht sein.

Bevorzugt ist eine Ausführungsform, bei welcher der Haftkleber zumindest einer Oberfläche weichmacherbeständig ist. Besonders bevorzugt sind Ausführungsformen, bei welchen der Haftkleber der unteren und der oberen Oberfläche weichmacherbeständig sind.

Durch geeignete Auswahl der verwendeten Haftkleberbeschichtung bzw. der verwendeten Haftkleber zusammen mit der Trägerschicht wird gemäss der Erfindung sichergestellt, dass zu jedem Zeitpunkt eine rückstandsfrei Wiederablösbarkeit er erfindungsgemäßen Selbstklebefolie zumindest vom Untergrund, beispielsweise Fußboden, aber u.U. auch vom zu fixierenden Belag, beispielsweise Bodenbelag, Teppich oder Plakat, gegeben ist.

Die Klebkräfte der beiden Haftkleberbeschichtungen der Selbstklebefolie werden bevorzugt durch Wahl des Haftklebstoffs und Auftragsgewicht bestimmt.

Bevorzugt liegt die nach DIN EN 1939 (von November 1996) gemessene Klebekraft, gemessen als Schälkraft der Haftkleberbeschichtung, der unteren Oberfläche in einem Bereich von 0.5 N/25 mm bis 15 N/25 mm, bevorzugt zwischen 1,0 N/25 mm bis 10 N/25 mm, besonders bevorzugt zwischen 2,0 N/25 mm bis 8.0 N/25 mm und ganz besonders bevorzugt zwischen 3,0 N/25 mm bis 6,0 N/25 mm.

Bevorzugt liegt die nach DIN EN 1939 (von November 1996) gemessene Schälkraft der Haftkleberbeschichtung der oberen Oberfläche oberhalb von 2 N/25 mm, bevorzugt oberhalb 5 N/25 mm, besonders bevorzugt oberhalb 10 N/25 mm und ganz besonders bevorzugt oberhalb 20 N/25 mm.

Gemäss einer bevorzugten Ausführungsform der Erfindung sind die Trägerschicht und die Haftkleberbeschichtung der Selbstklebefolie wasserdampfdurchlässig ausgebildet. Die Bestimmung der Wasserdampfdurchlässigkeit wird nach DIN 53122-1, Teil 1, gravimetrisches Verfahren (August 2001) bei 23 °C und einer relativen Luftfeuchte von 85 % im Verdampfungsraum gemessen, wobei die untere Oberfläche der Selbstklebefolie zum Verdampfungsraum und die obere Oberfläche zum Absorptionsraum gerichtet ist. Die Wasserdampfdurchlässigkeit (WDD) der Selbstklebefolie ist bevorzugt größer als 2 g/(m2*d), bevorzugter größer als 5 g/(m2*d), besonders bevorzugt größer als 5 g/(m2*d), am bevorzugtesten größer als 10 g/(m2*d) und am meisten bevorzugt größer als 20 g/(m2*d).

Durch die wasserdampfdurchlässige Ausbildung der erfindungsgemäßen Selbstklebefolie ist es möglich, dass eventuell vom Fußboden aufsteigende Restfeuchtigkeit, d.h. Wasserdampf, insbesondere bei frisch verlegtem Parkett oder bei der Verlegung von Fußbodenbelägen auf frisch aufgebrachtem Zementestrich, welcher unter Umständen noch nicht vollständig ausgetrocknet ist, sich nicht zwischen Fußboden und Trägerschicht der erfindungsgemäßen Selbstklebefolie ansammelt und somit die Klebeeigenschaften der verwendeten Haftkleberbeschichtung negativ beeinflusst. Insbesondere kann das Nachlassen der Klebkraft sowie eine eventuell verschlechterte Wiederablösbarkeit vermieden werden. Auch kann es aufgrund einer entsprechenden Gestaltung der Selbstklebefolie bei Verkleben eines Fußbodenbelags nicht zur Bildung von Schimmel oder Aufweichung des eventuell verlegten Parketts aufgrund von angesammelten Wasserdampf kommen.

Es kann vorteilhaft sein, die Wasserdampfdurchlässigkeit der Trägerschicht und der Haftkleberbeschichtung durch Perforieren der Trägerschicht und/oder Perforieren der Haftkleberbeschichtung zumindest einer der Oberflächen zu erreichen. Somit kann auf einfache Weise eine Wasserdampfdurchlässigkeit der Selbstklebefolie erreicht werden. Das Perforieren gemäss der Erfindung ist dabei nicht so zu verstehen, dass die Selbstklebefolie lediglich abschnittsweise vorkonfektioniert ist und vorgegebene Abschnitte der Selbstklebefolie entlang entsprechend verlaufender Perforationslöcher von Hand von der übrigen Selbstklebefolie abtrennbar sind.

Besonders bevorzugt ist es, die Trägerschicht und/oder die Haftkleberbeschichtung zumindest einer der Oberflächen über die gesamte Fläche verteilt mit Perforationslöchern zu versehen. Somit ist, insbesondere bei großflächiger Verwendung der erfindungsgemäßen Selbstklebefolie eine bestmögliche Wasserdampfdurchlässigkeit gegeben.

Besonders vorteilhaft ist es, falls die Perforationslöcher in der Trägerschicht und in der Haftkleberbeschichtung zumindest einer der Oberflächen miteinander fluchtend angeordnet sind, so dass ein direkter Durchlass eventuell aufsteigenden Wasserdampfs aus dem Fußboden möglich ist.

Bevorzugt weisen die Perforationslöcher einen Abstand voneinander von vorzugsweise weniger als 10 cm auf, wobei die Löcher eine Querschnittsfläche von vorzugsweise weniger als 4 mm² aufweisen.

Selbstverständlich ist es im Rahmen der Erfindung möglich, beispielsweise eine perforierte Trägerschicht mit einer zumindest an einer Oberfläche perforierten Haftkleberbeschichtung und einer unperforierten diffusionsfähigen Haftkleberbeschichtung auf der jeweils anderen Oberfläche zu kombinieren.

Es ist vorteilhaft, dass die Trägerschicht zumindest an ihrer unteren Oberfläche im wesentlichen eben ausgebildet ist. Ferner ist es vorteilhaft, falls die Haftkleberbeschichtung zumindest an ihrer unteren Oberfläche im wesentlichen eben ausgebildet ist. So können gemäss einer vorteilhaften Ausführungsform der Erfindung im Falle vorhandener Perforierung die Trägerschicht und/oder die Haftkleberbeschichtung zumindest der unteren Oberfläche zumindest zwischen den Perforationslöchern eben ausgebildet sein, was durch den Ausdruck "im wesentlichen eben" mit ausgedrückt sein soll.

Die Herstellung der besonders bevorzugten Ausführungsform der Selbstklebefolie erfolgt derart, dass die Perforationslöcher von unten, d.h. von der Seite der unteren, dem Untergrund, z.B. Fußboden oder Treppe, zugewandten Oberfläche her, in die Selbstklebefolie eingestochen werden.

Auf diese Weise ist sichergestellt, dass die erfindungsgemäße Selbstklebefolie zumindest an der unteren Oberfläche der Trägerschicht bzw. dass die H aftkleberbeschichtung zumindest der unteren Oberfläche im wesentlichen eben ausgebildet ist, da die Grate der Perforationslöcher der Trägerschicht aufgrund der Einstichrichtung nach oben von der unteren Oberfläche weg gerichtet sind. Ferner ebnet die Haftkleberbeschichtung zumindest der unteren Oberfläche diese im wesentlichen aus.

In einer bevorzugten Ausführungsform weist die erfindungsgemäße Selbstklebefolie zumindest auf einer Oberfläche ein Gewebe und/oder Gelege und/oder textile Struktur auf, das insbesondere zum Erhalt der Dimensionsstabilität der Selbstklebefolie beim Verlegen und beim Ablösen dient.

Zur Verbesserung der Handhabbarkeit der erfindungsgemäßen Selbstklebefolie weist zumindest an einer der beiden Oberflächen, bevorzugt zumindest an der oberen Oberfläche auf ihrer Haftkleberbeschichtung einen entfernbaren Abdeckfilm auf. Dieser kann beispielsweise aus Silikonpapier oder anderem geeigneten Material bestehen. Der Abdeckfilm ist in einer bevorzugten Ausführungsform perforiert und/oder rutschhemmend ausgestaltet. In einer besonders bevorzugten Ausführungsform sind Selbstklebefolie und Abdeckfilm fluchtend perforiert. Die Herstellung der besonders bevorzugten Ausführungsform der Selbstklebefolie erfolgt derart, dass die Perforationslöcher von unten, d.h. von der Seite der unteren, dem Untergrund, z.B. Fußboden oder Treppe, zugewandten Oberfläche hier, in die Selbstklebefolie eingestochen werden.

Besonders vorteilhaft ist es, falls der entfernbare Abdeckfilm, der zumindest an einer der beiden Oberflächen vorgesehen ist, perforiert ist mit Perforationslöchern, welche bevorzugt mit den Perforationslöchern der Trägerschicht und/oder der Haftkleberbeschichtung zumindest einer der Oberflächen fluchtend angeordnet sind.

Es kann auch zusätzlich oder lediglich auf der unteren Oberfläche ein entfernbarer Abdeckfilm vorhanden sein. Im Falle, dass die Haftstärke der unteren Oberfläche im Vergleich zur Haftstärke der oberen Oberfläche geringer ist, ist dies jedoch nicht unbedingt erforderlich.

Der Abdeckfilm liegt lösbar haftend praktisch lückenlos an der entsprechenden Oberfläche an.

Erfindungsgemäß bevorzugt ist die Selbstklebefolie mit einer Mindestbreite von 150 mm zum großflächigen Abdecken des mit dem Fußbodenbelag zu belegenden Fußbodens bzw. der Treppe oder dem Plakat ausgebildet ist und ihre Breite liegt in einem Bereich von 150 mm bis 2000 mm, insbesondere in einem Bereich von 500 mm bis 1500 mm, und insbesondere in einem Bereich von 600 mm bis 1000 mm, wobei ihre Breite bei Verwendung für Treppen insbesondere 200 mm bis 250 mm, und bei Verwendung auf Fußböden mindestens 350 mm beträgt.

Erfindungsgemäß bevorzugt weist die Trägerschicht der Selbstklebefolie eine Dicke in einem Bereich von 10 bis 120 µm, bevorzugt in einem Bereich von 25 bis 75 µm, und besonders bevorzugt in einem Bereich von 50 bis 70 µm auf.

Zum Transport kann die Selbstklebefolie in Rollenform vorliegen. Die Selbstklebefolie kann dazu zu einer Rolle gewickelt sein. Generell kann dann die Selbstklebefolie in gewünschter Länge von der Bahnlänge der Rolle abgewickelt werden. Die Selbstklebefolie kann mit bestimmter Breite und auch in bestimmten Längen und/oder Formen vorkonfektioniert sein.

Die oben im Zusammenhang mit der Anwendung bei der Verlegung von Bodenbelägen beschriebenen Merkmale der erfindungsgemäßen Selbstklebefolie gelten - soweit sinnvoll übertragbar - auch im Zusammenhang mit der Anwendung beim Verkleben von flächigen, flexiblen Materialien wie Folien, Plakaten oder Textilien.

Die Erfindung wird im Folgenden anhand der beigefügten Zeichnung beispielhaft anhand von bevorzugten Ausführungsformen näher erläutert werden. Es zeigt:
- Fig. 1: eine schematische, perspektivische Ansicht einer Selbstklebefolie gemäß einer ersten bevorzugten Ausführungsform;
- Fig. 2: eine schematische, perspektivische Draufsicht auf eine erfindungsgemäß zu verwendenden Selbstklebefolie gemäß einer zweiten bevorzugten Ausführungsform der Erfindung;
- Fig. 3: eine schematische Querschnittansicht einer dritten bevorzugten Ausführungsform;
- Fig. 4: eine schematische Draufsicht auf eine Selbstklebefolie gemäß einer vierten bevorzugen Ausführungsform;
- Fig. 5: eine schematische Draufsicht auf eine Selbstklebefolie gemäß einer fünften bevorzugten Ausführungsform;
- Fig. 6: eine schematische Draufsicht gemäß einer sechsten bevorzugten Ausführungsform der erfindungsgemäß zu verwendenden Selbstklebefolie; und
- Fig. 7: eine schematische Seitenansicht einer erfindungsgemäß zu verwendenden Selbstklebefolie gemäß einer siebten bevorzugten Ausführungsform der Erfindung.

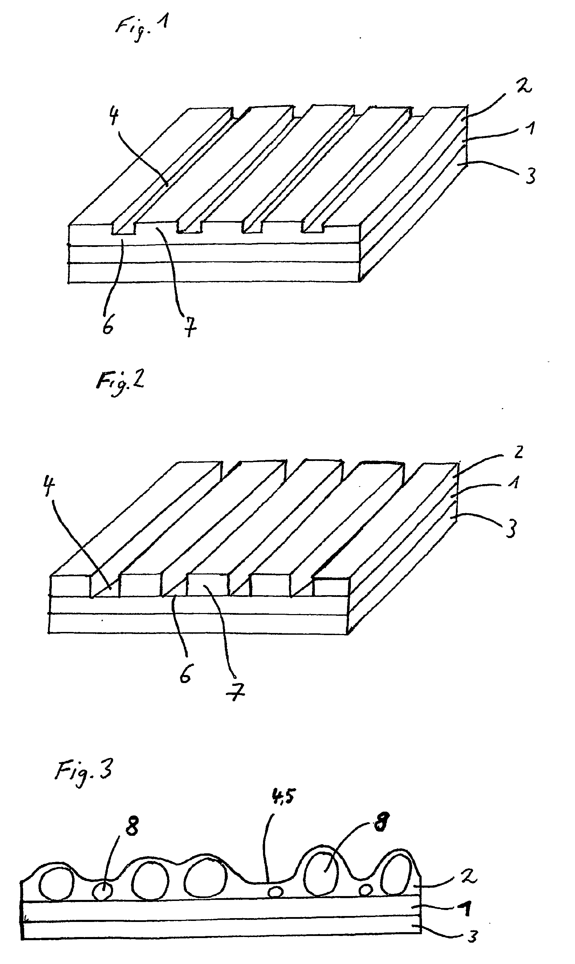

Fig. 1 zeigt eine schematische, perspektivische Draufsicht auf eine Selbstklebefolie gemäß einer ersten bevorzugten Ausführungsform. Die Selbstklebefolie dient erfindungsgemäß zum Verkleben eines Bodenbelags, insbesondere eines Teppichbodens, auf einem Fußboden, insbesondere Parkett, bzw. auf einer Treppe, oder zum Verkleben eines Plakats auf einem Untergrund. Die Selbstklebefolie weist eine Trägerschicht 1 aus Kunststofffolie auf, welche an einer oberen, dem Fußbodenbelag zugewandten Oberfläche, und an einer unteren, dem Fußboden bzw. der Treppe zugewandten Oberfläche mit einer Haftkleberschichtung 2, 3 beschichtet ist. Die Haftkleberbeschichtung 2 ist dabei an der oberen Oberfläche angeordnet und die Haftkleberbeschichtung 3 ist an der unteren Oberfläche angeordnet. Erfindungsgemäß weist die Selbstklebefolie zumindest an ihrer oberen, dem Fußbodenbelag zugewandten Oberfläche in einer Ebene, welche senkrecht zur Dicke der Selbstklebefolie verläuft, Luftkanäle 4 zum Bodenbelag hin zwischen der Selbstklebefolie und dem Bodenbelag auf In der in Fig. 1 schematisch gezeigten bevorzugten ersten Ausführungsform sind die Luftkanäle 4 in der Haftkleberbeschichtung 2 der oberen Oberfläche ausgebildet, wobei erste Bereiche 6 mit dünnerer, im Wechsel mit zweiten Bereichen 7 mit dickerer Haftkleberbeschichtung 2 ausgebildet sind und die ersten Bereiche 6 die Luftkanäle 4 bilden. Erfindungsgemäß bevorzugt beträgt die Breite der Luftkanäle höchstens 15 mm und am bevorzugtesten höchstens 0,5 mm, wobei je nach Anwendung auch die entsprechenden Zwischenwerte möglich sind.

Erfindungsgemäß sind also definierte Luftkanäle 4 vorgesehen, welche auch nach der Verlegung des Bodenbelags oder eines Plakats erhalten bleiben oder zumindest weitgehend erhalten bleiben. Vorzugsweise bleiben die Luftkanäle 4 mindestens so lange erhalten, wie die zwischen der Selbstklebefolie und dem Bodenbelag bzw. dem Plakat eingeschlossene Luft zum Ausgasen benötigt, besonders bevorzugt bleibt sie längere Zeit erhalten. In dem in Fig. 1 gezeigten bevorzugten Ausführungsbeispiel laufen die Luftkanäle 4 parallel zur Bahnrichtung der erfindungsgemäßen Selbstklebefolie. Die einzelnen Luftkanäle 4 sind dabei voneinander isoliert angeordnet und nicht miteinander verbunden. Bevorzugt laufen die entsprechenden Luftkanäle 4 auch bis zu den Rändern der entsprechenden Selbstklebefolie, damit die Luft in der Verlegesituation am Rand austreten kann.

Generell beträgt das Verhältnis der Fläche der Luftkanäle 4 und/oder der Luftkammern 5 zumindest einer Oberfläche zur Gesamtfläche zumindest dieser einen Oberfläche maximal 30%, am bevorzugtesten maximal 10%. Auch entsprechende Zwischenwerte sind je nach Anwendungsfall möglich. Dies gilt für alle Ausführungsformen der Erfindung.

Es sei generell darauf hingewiesen, dass die Größenordnungen in den schematisch gezeigten Figuren nicht der Realität entsprechen, insbesondere die Größenverhältnisse der einzelnen Schichten zueinander ist zur besseren Übersichtlichkeit nicht maßstabsgetreu dargestellt.

Fig. 2 zeigt in einer schematischen Draufsicht eine zweite bevorzugte Ausführungsform der erfindungsgemäß zu verwendenden Selbstklebefolie. Dabei entsprechen die erfindungsgemäßen Merkmale gemäß der Darstellung der Fig. 2 den Merkmalen der Fig. 1 mit dem Unterschied, dass die ersten Bereiche 6 keine Haftkleberbeschichtung aufweisen und die zweiten Bereiche 7 als streifenförmig aufgebrachte Haftkleberbeschichtung 2 ausgebildet sind.

Fig. 3 zeigt eine dritte bevorzugte Ausführungsform der erfindungsgemäß zu verwendenden Selbstklebefolie in einer seitlichen Schnittansicht. Dabei sind in der Haftkleberbeschichtung 2 der oberen Oberfläche Luftkanäle 4 und/oder Luftkammern 5 derart ausgebildet, dass dort durch einen Zusatz von groben Füllstoffen 8 eine mittlere Rauigkeit Ra von 1 bis 300 µm erzeugt ist.

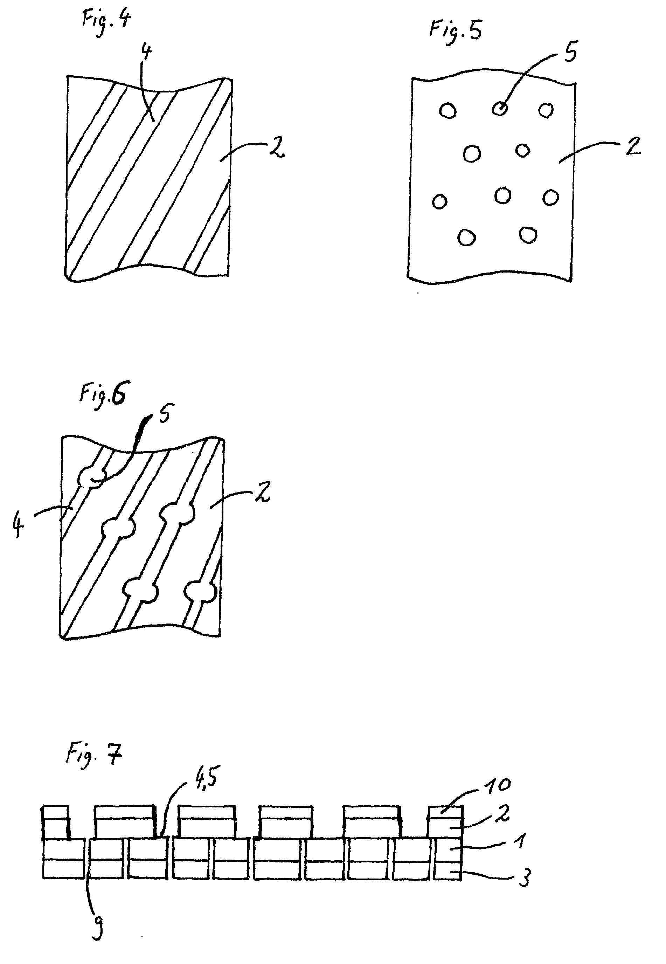

Fig. 4 zeigt in einer schematischen Draufsicht eine weitere bevorzugte Ausführungsform. Dabei sind die Luftkanäle 4 in einem Winkel schräg zur Bahnrichtung der erfindungsgemäßen Selbstklebefolie in der Haftkleberbeschichtung 2 angeordnet.

Fig. 5 zeigt eine weitere bevorzugte Ausführungsform der erfindungsgemäß zu verwendenden Selbstklebefolie. Dabei sind die Luftkammern 5 in der Haftkleberbeschichtung 2 gleichmäßig verteilt angeordnet. In der in Fig. 5 gezeigten Ausführungsform sind die Luftkammern 5 kreisförmig ausgebildet. Es ist jedoch jede geeignete Form denkbar, insbesondere quadratisch, rechteckig, dreieckig, trapezförmig, rautenförmig oder oval. Auch mehreckige Formen sind denkbar. Generell liegt der Durchmesser der Luftkammern 5 höchstens zwischen 15 oder 10 mm und besonders bevorzugt ist er kleiner als 0,5 mm. Dazwischen sind je nach Anwendungsfall entsprechende Durchmesser wählbar.

Fig. 6 eine sechste bevorzugte Ausführungsform, bei welcher Luftkanäle 4 und Luftkammern 5 in der Haftkleberbeschichtung 2 gemeinsam vorgesehen sind und die Luftkammern 5 mit den jeweiligen Luftkanälen 4 verbunden sind.

Fig. 7 zeigt eine weitere bevorzugte Ausführungsform. Dabei sind zumindest die Trägerschicht 1 und die Haftkleberbeschichtung 3 mit Perforationslöchern 9 versehen. Die Haftkleberbeschichtung 2 weist die erfindungsgemäßen Luftkanäle 4 und Luftkammern 5 auf und zusätzlich ist ein entfernbarer Abdeckfilm 10 auf zumindest der oberen Oberfläche vorgesehen. Auf der linken Seite der schematischen Schnittansicht der Fig. 7 sind zumindest einige der Perforationsöffnungen fluchtend mit den Luftkanälen 4 und Luftkammern 5 angeordnet. Auf der rechten Seite der Abbildung der Fig. 7 verlaufen die Perforationsöffnungen 9 nicht fluchtend mit den Luftkanälen 4 und den Luftkammern 5. Durch die Kombination von Luftkanälen 4 und/oder Luftkammern 5 und Perforationsöffnungen 9 ist es besonders gut möglich, dass Luftblasen beim Verlegen einer entsprechend gestalteten erfindungsgemäßen Selbstklebefolie vermieden werden können, da auch eventuell vorhandene Luft zwischen Boden und Selbstklebefolie einfach zu den Luftkanälen 4 und/oder Luftkammer 5 durch die Perforationsöffnungen 9 geleitet wird.

Generell bietet die erfindungsgemäß zu verwendende Selbstklebefolie eine blasen- und spannungsfreie Verlegung von flächigen, flexiblen Materialien, wie Bodenbelägen, Folien, Plakaten oder Textilien bei einfacher Handhabbarkeit. Auch ist die erfindungsgemäß zu verwendende Selbstklebefolie kostengünstig herstellbar, da sie verhältnismäßig geringen konstruktiven Aufwand bei der entsprechenden Produktgestaltung erfordert.

## Patentansprüche

1. Verwendung einer Selbstklebefolie zur Verklebung eines Fußbodenbelags auf einem Fußboden, wobei die Selbstklebefolie eine Trägerschicht (1) aus Kunststoffolie aufweist, welche an einer oberen, dem Fußbodenbelag zugewandten Oberfläche und an einer unteren, dem Untergrund, insbesondere dem Fußboden bzw. der Treppe, zugewandten Oberfläche mit einer Haftkleberbeschichtung (2, 3) beschichtet ist, **dadurch gekennzeichnet, dass** die Selbstklebefolie zumindest an ihrer oberen Oberfläche in einer Ebene, welche senkrecht zur Dicke der Selbstklebefolie verläuft, mit Luftkanälen (4) und/oder Luftkammern (5) zum Bodenbelag hin zwischen der Selbstklebefolie und dem Bodenbelag ausgebildet ist, die nach der Verlegung des Fußbodenbelags erhalten bleiben oder weitgehend erhalten bleiben, wobei das Verhältnis der Fläche der Luftkanäle (4) und/oder Luftkammern (5) zumindest einer Oberfläche zur Gesamtfläche zumindest einer Oberfläche maximal 30% beträgt, wobei die untere Oberfläche eine Haftkleberbeschichtung (3) mit geringerer Haftstärke als die Haftstärke der Haftkleberbeschichtung (2) an der oberen Oberfläche aufweist und unterschiedliche mittlere Kleberauftragsgewichte an beiden Oberflächen zur Erzielung der unterschiedlichen Haftstärken vorgesehen sind, wobei die Oberfläche mit der größeren Haftstärke ein höheres mittleres Kleberauftragsgewicht aufweist, und wobei das mittlere Kleberauftragsgewicht zumindest auf der oberen Oberfläche im getrockneten Zustand im Bereich von 5 bis 250 g/m² liegt und zumindest auf der unteren Oberfläche im Bereich von 5 bis 100 g/m² liegt.

2. Verwendung nach Anspruch 1, **dadurch gekennzeichnet, dass** die Luftkanäle (4) und/oder Luftkammern (5) in der Haftkleberbeschichtung (2, 3) der zumindest einen Oberfläche ausgebildet sind, wobei bevorzugt erste Bereiche (6) mit dünnerer und/oder keiner Haftkleberbeschichtung im Wechsel mit zweiten Bereichen (7) mit dickerer Haflldeberbeschichtung ausgebildet sind und die ersten Bereiche (6) die Luftkanäle (4) und/oder Luftkammern (5) bilden.

3. Verwendung nach Anspruch 1 oder 2, **dadurch gekennzeichnet, dass** die Luftkanäle (4) und/oder Luftkammern (5) in der Haftkleberbeschichtung der zumindest einen Oberfläche ausgebildet sind, wobei die Haftkleberbeschichtung bevorzugt eine mittlere Rauigkeit Ra von 1 - 300 µm, bevorzugter von 5 - 200 µm, besonders bevorzugt von 10 - 150 µm, ganz besonders bevorzugt von 15 - 100 µm und am bevorzugtesten von 20 - 75 µm aufweist, wobei die mittlere Rauigkeit bevorzugt durch Zusatz von groben Füllstoffen (8) erzeugt ist, mit einem durchschnittlichen Korndurchmesser bevorzugt im Bereich vom 0,1-fachen bis zum 10-fachen, bevorzugter im Bereich des 0.3-fachen bis 5-fachen und besonders bevorzugt im Bereich vom 0,5-fachen bis 3-fachen der Dicke der Haftklebeschicht der zumindest einen Oberfläche der Selbstklebefolie.

4. Verwendung nach einem der Ansprüche 1 bis 3, **dadurch gekennzeichnet, dass** das Verhältnis der Fläche der Luftkanäle (4) und/oder Luftkammern (5) zumindest einer Oberfläche zur Gesamtfläche zumindest einer Oberfläche bevorzugt maximal 20%, besonders bevorzugt maximal 15% und am bevorzugtesten maximal 10% beträgt.

5. Verwendung nach einem der Ansprüche 1 bis 4, **dadurch gekennzeichnet, dass** die Breite der Luftkanäle (4) und/oder der Durchmesser der Luftkammern (5) maximal 15 mm oder maximal 10 mm, bevorzugt maximal 5 mm, bevorzugter maximal 3 mm, noch bevorzugter maximal 1,5 mm, besonders bevorzugt maximal 1 mm und am bevorzugtesten maximal 0,5 mm beträgt

6. Verwendung nach einem der Ansprüche 1 bis 5, **dadurch gekennzeichnet, dass** die Luftkanäle (4) und/oder Luftkammern (5) jeweils Abstände zueinander in einem Bereich von minimal 10 mm bis maximal 100 mm aufweisen.

7. Verwendung nach einem der Ansprüche 1 bis 6, **dadurch gekennzeichnet, dass** die Trägerschicht (1) und die Haftkleberbeschichtung (2, 3) wasserdampfdurchlässig, ausgebildet sind, wobei die Wasserdampfdurchlässigkeit (WDD) bevorzugt größer als 2 g/(m2*d), bevorzugter größer als 5 g/(m2*d), besonders bevorzugt größer als 5 g/(m2*d), am bevorzugtesten größer als 10 g/(m2*d) und am meisten bevorzugt größer als 20 g/(m2*d) ist.

8. Verwendung nach Anspruch 7, **dadurch gekennzeichnet, dass** die Trägerschicht (1) und/oder die Haftkleberbeschichtung (2, 3) zumindest einer Oberfläche perforiert ist bzw. sind, mit Perforationslöchern (9), welche über die ganze Fläche in einem Abstand voneinander von bevorzugt weniger als 10 cm verteilt sind und eine Querschnittsfläche von weniger als 4 mm² aufweisen.

9. Verwendung nach Anspruch 8, **dadurch gekennzeichnet, dass** die Perforationslöcher (9) in der Trägerschicht (1) und der Haftkleberbeschichtung (2, 3) zumindest einer der Oberflächen fluchtend angeordnet sind.

10. Verwendung nach einem der Ansprüche 1 bis 9, **dadurch gekennzeichnet, dass** die Trägerschicht (1) zumindest an ihrer unteren Oberfläche haftkleberverankernd gestaltet ist, bevorzugt koronisiert ist und /oder mit einer Primerbeschichtung versehen ist und/oder mitextrudierten Haftvermittler aufweist, wobei die haftkleberverankernde Oberfläche bevorzugt als Schicht ausgebildet ist

11. Verwendung nach Anspruch 10, **dadurch gekennzeichnet, dass** die Trägerschicht (1) aus haftkleberverankerndem Material besteht.

12. Verwendung nach einem der Ansprüche 1 bis 11, **dadurch gekennzeichnet, dass** die Trägerschicht (1) zumindest einen Abschnitt als Bremsschicht gegen den Durchgang von Additiven und/oder Weichmachern aufweist.

13. Verwendung nach Anspruch 12, **dadurch gekennzeichnet, dass** die Bremsschicht im Wesentlichen die haftkleberverankernde Oberfläche ist.

14. Verwendung nach einem der Ansprüche 1 bis 13, **dadurch gekennzeichnet, dass** die Trägerschicht (1) an ihrer unteren Oberfläche im Wesentlichen eben ausgebildet ist.

15. Verwendung nach einem der Ansprüche 1 bis 14, **dadurch gekennzeichnet, dass** zumindest die Haftkleberbeschichtung (3) der unteren Oberfläche im Wesentlichen eben ausgebildet ist.

16. Verwendung nach einem der Ansprüche 1 bis 15, **dadurch gekennzeichnet, dass** das mittlere Kleberauftragsgewicht zumindest auf der oberen Oberfläche im getrockneten Zustand bevorzugt im Bereich von 50 bis 150 g/m² liegt und bevorzugt zumindest auf der unteren Oberfläche im Bereich von 10 bis 80 g/m² liegt.

17. Verwendung nach einem der Ansprüche 1 bis 16, **dadurch gekennzeichnet, dass** die Haftkleberbeschichtung (2, 3) eine auf Acrylat basierende Dispersion, bevorzugt angereichert mit Harzen und mit darin enthaltenem UV- und Alterungsschutz, oder auch ein Material auf Lösungsmittelbasis oder auf Basis von UV-, elektronenstrahl- oder thermischen Vernetzung oder auf HotmeltBasis ist, welche(s) bevorzugt auch für Wasserdampf diffusionsfähig ist, wobei zumindest die Haftkleberbeschichtung (2) an der oberen Oberfläche bevorzugt aus weichmacherbeständigem Haftkleber besteht.

18. Verwendung nach nach einem der Anspruche 1 bis 17, **dadurch gekennzeichnet, dass** die Haftkleberbeschichtung (2, 3) aus jeweils unterschiedlichen Haftklebern auf der oberen bzw. der unteren Oberfläche besteht

19. Verwendung nach einem der Ansprüche 1 bis 18, **dadurch gekennzeichnet, dass** die Haftstärke zumindest der unteren Oberfläche eine Klebekraft (gemessen als Schälkraft nach DIN EN 1939, November 1996) in einem Bereich von 0,5 N/25 mm bis 15 N/25 mm, bevorzugt zwischen 1,0 N/25 mm bis 10 N/25 mm, besonders bevorzugt zwischen 2,0 N/25 mm bis 8,0 N/25 mm und ganz besonders bevorzugt zwischen 3,0 N/25 mm bis 6,0 N/25 mm aufweist.

20. Verwendung nach einem der Ansprüche 1 bis 19, **dadurch gekennzeichnet, dass** die Haftstärke zumindest der oberen Oberfläche eine Klebekraft (gemessen als Schälkraft nach DIN EN 1939, November 1996) in einem Bereich von mehr als 2 N/25 mm, bevorzugt mehr als 5 N/25 mm, besonders bevorzugt mehr als 10 N/25 mm und ganz besonders bevorzugt mehr als 20 N/25 mm aufweist.

21. Verwendung nach einem der Ansprüche 1 bis 20, **dadurch gekennzeichnet, dass** ein entfernbarer Abdeckfilm (10) auf zumindest einer der beiden Oberflächen, bevorzugt zumindest auf der oberen Oberfläche vorhanden ist.

22. Verwendung nach Anspruch 21, **dadurch gekennzeichnet, dass** der entfernbare Abdeckfilm (10) perforiert ist mit Perforationslöchern, welche bevorzugt mit den Perforationslöchern (9) der Trägerschicht (1) und/oder der Haftkleberbeschichtung (2, 3) zumindest einer der Oberflächen fluchtend angeordnet sind.

23. Verwendung nach einem der Ansprüche 1 bis 22, **dadurch gekennzeichnet, dass** mit einer Mindestbreite von 150 mm zum großflächigen Abdecken des mit dem Fußbodenbelag zu belegenden Fußbodens bzw. der Treppe oder dem Plakat ausgebildet ist und ihre Breite in einem Bereich von 150 mm bis 2000 mm liegt, insbesondere in einem Bereich von 500 mm bis 1500 mm, und insbesondere in einem Bereich von 600 mm bis 1000 mm liegt, wobei ihre Breite bei Verwendung für Treppen insbesondere 200 mm bis 250 mm, und bei Verwendung auf Fußböden mindestens 350 mm beträgt.

24. Verwendung nach einem der Ansprüche 1 bis 23, **dadurch gekennzeichnet, dass** die Trägerschicht (1) eine Dicke in einem Bereich von 10 bis 120 µm, bevorzugt in einem Bereich von 25 bis 75 µm, und besonders bevorzugt in einem Bereich von 50 bis 70 µm aufweist.

25. Verwendung nach einem der Ansprüche 1 bis 24, **dadurch gekennzeichnet, dass** die Selbstklebefolie zu einer Rolle gewickelt ist.

## Claims

1. Use of a self-adhesive film for adhering a floor covering to a floor, wherein the self-adhesive film has a backing (1) made of plastic film that is coated with a contact adhesive coating (2, 3) on a top surface facing the floor covering and on a bottom surface facing the substrate, in particular the floor or staircase, **characterized in that** the self-adhesive film is designed, at least at its top surface in a plane extending perpendicular to the thickness of the self-adhesive film, with air passages (4) and/or air chambers (5) toward the floor covering between the self-adhesive film and the floor covering that remain intact or largely intact after laying of the floor covering, wherein the ratio of the area of the air passages (4) and/or air chambers (5) of at least one surface to the total area of at least one surface is a maximum of 30%, wherein the bottom surface has a contact adhesive coating (3) with lower adhesive strength than the adhesive strength of the contact adhesive coating (2) at the top surface, and different average adhesive application weights are provided on the two surfaces to achieve the different adhesive strengths, wherein the surface with the greater adhesive strength has a higher average adhesive application weight, and wherein the average adhesive application weight, at least on the top surface in the dried state, is in the range from 5 to 250 g/m² and at least on the bottom surface is in the range from 5 to 100 g/m².

2. Use according to claim 1, **characterized in that** the air passages (4) and/or air chambers (5) are made in the contact adhesive coating (2, 3) of the at least one surface, wherein preferably first regions (6) with thinner and/or no contact adhesive coating are made in alternation with second regions (7) with thicker contact adhesive coating, and the first regions (6) form the air passages (4) and/or air chambers (5).

3. Use according to claim 1 or 2, **characterized in that** the air passages (4) and/or air chambers (5) are formed in the contact adhesive coating of the at least one surface, wherein the contact adhesive coating preferably has an average roughness Ra from 1 - 300 µm, more preferably from 5 - 200 µm, especially preferably from 10 - 150 µm, very especially preferably from 15 - 100 µm, and most preferably from 20 - 75 µm, wherein the average roughness preferably is produced through the addition of coarse fillers (8), with an average particle size preferably in the range from 0.1 times to 10 times, more preferably in the range of 0.3 times to 5 times, and especially preferably in the range from 0.5 times to 3 times the thickness of the contact adhesive coat of the at least one surface of the self-adhesive film.

4. Use according to any one of claims 1 to 3, **characterized in that** the ratio of the area of the air passages (4) and/or air chambers (5) of at least one surface to the total area of at least one surface preferably is a maximum of 20%, especially preferably a maximum of 15%, and most preferably a maximum of 10%.

5. Use according to any one of claims 1 to 4, **characterized in that** the width of the air passages (4) and/or the diameter of the air chambers (5) is a maximum of 15 mm or a maximum of 10 mm, preferably a maximum of 5 mm, more preferably a maximum of 3 mm, even more preferably a maximum of 1.5 mm, especially preferably a maximum of 1 mm, and most preferably a maximum of 0.5 mm.

6. Use according to any one of claims 1 to 5, **characterized in that** the air passages (4) and/or air chambers (5) are separated from one another with a distance in a range of a minimum of 10 mm to a maximum of 100 mm.

7. Use according to any one of claims 1 to 6, **characterized in that** the backing (1) and the contact adhesive coating (2, 3) are designed to be permeable to water vapor, wherein the permeability to water vapor (WDD) preferably is greater than 2 g/(m2*d), more preferably greater than 5 g/(m2*d), especially preferably greater than 5 g/(m2*d), extremely preferably greater than 10 g/(m2*d), and most preferably greater than 20 g/(m2*d).

8. Use according to claim 7, **characterized in that** the backing (1) and/or the contact adhesive coating (2, 3) of at least one surface is or are perforated, with perforations (9) that are distributed over the entire area at a distance from one another of preferably less than 10 cm and that have a cross-sectional area of less than 4 mm².

9. Use according to claim 8, **characterized in that** the perforations (9) in the backing (1) and in the contact adhesive coating (2, 3) of at least one of the surfaces are aligned.

10. Use according to any one of claims 1 to 9, **characterized in that** the backing (1) is designed to be adhesive-anchoring, at least at its bottom surface, preferably is coronized and/or is provided with a primer coating and/or has co-extruded adhesive agent, wherein the adhesive-anchoring surface preferably is designed as a layer.

11. Use according to claim 10, **characterized in that** the backing (1) is made of adhesive-anchoring material.

12. Use according to any one of claims 1 to 11, **characterized in that** the backing (1) has at least one section as a retarding layer to prevent penetration of additives and/or plasticizers.

13. Use according to claim 12, **characterized in that** the retarding layer is essentially the adhesive-anchoring surface.

14. Use according to any one of claims 1 to 13, **characterized in that** the backing (1) is designed to be essentially flat on its bottom surface.

15. Use according to any one of claims 1 to 14, **characterized in that** at least the contact adhesive coating (3) of the bottom surface is designed to be essentially flat.

16. Use according to any one of claims 1 to 15, **characterized in that** the average adhesive application weight, at least on the top surface in the dried state, preferably is in the range from 50 to 150 g/m², and at least on the bottom surface preferably is in the range from 10 to 80 g/m².

17. Use according to any one of claims 1 to 16, **characterized in that** the contact adhesive coating (2, 3) is an acrylate-based dispersion, preferably enriched with resins and with UV-protection and anti-aging protection contained therein, or else is a solvent-based material or a material based on UV cross-linking, electron beam cross-linking, or thermal cross-linking, or a hot melt based material, which preferably is also diffusible to water vapor, wherein at least the contact adhesive coating (2) on the top surface preferably is made of plasticizer-resistant contact adhesive.

18. Use according to any one of claims 1 to 17, **characterized in that** the contact adhesive coating (2, 3) is made of different contact adhesives on the top and bottom surfaces.

19. Use according to any one of claims 1 to 18, **characterized in that** the adhesive strength, at least of the bottom surface, has an adhesive force (measured as peel force per DIN EN 1939, November 1996) in a range from 0.5 N/25 mm to 15 N/25 mm, preferably between 1.0 N/25 mm and 10 N/25 mm, especially preferably between 2.0 N/25 mm and 8.0 N/25 mm, and very especially preferably between 3.0 N/25 mm and 6.0 N/25 mm.

20. Use according to any one of claims 1 to 19, **characterized in that** the adhesive strength, at least of the top surface, has an adhesive force (measured as peel force per DIN EN 1939, November 1996) in a range of more than 2 N/25 mm, preferably more than 5 N/25 mm, especially preferably more than 10 N/25 mm, and very especially preferably more than 20 N/25 mm.

21. Use according to any one of claims 1 to 20, **characterized in that** a removable cover film (10) is present on at least one of the two surfaces, preferably on at least the top surface.

22. Use according to claim 21, **characterized in that** the removable cover film (10) is perforated with perforations, which preferably are aligned with the perforations (9) of the backing (1) and/or of the contact adhesive coating (2, 3) of at least one of the surfaces.

23. Use according to any one of claims 1 to 22, **characterized in that** the self-adhesive film is designed with a minimum width of 150 mm for large-area coverage of the floor or the staircase to be covered by the floor covering, or the poster, and its width lies in a range from 150 mm to 2000 mm, in particular in a range from 500 mm to 1500 mm, and in particular in a range from 600 mm to 1000 mm, wherein its width for use for staircases in particular is 200 mm to 250 mm, and for use for floors is at least 350 mm.

24. Use according to any one of claims 1 to 23, **characterized in that** the backing (1) has a thickness in a range from 10 to 120 µm, preferably in a range from 25 to 75 µm, and especially preferably in a range from 50 to 70 µm.

25. Use according to any one of claims 1 to 24, **characterized in that** the self-adhesive film is wound into a roll.

## Revendications

1. Utilisation d'une feuille autocollante pour coller un revêtement de sol sur un plancher, la feuille autocollante comportant une couche-support (1) en film de plastique qui est enduite d'une couche de colle adhésive (2,3) sur une face supérieure tournée vers le revêtement de sol et sur une face inférieure tournée vers le substrat, notamment le plancher ou l'escalier, **caractérisée en ce que** la feuille autocollante au moins dans sa face supérieure, dans un plan qui est perpendiculaire à l'épaisseur de la feuille autocollante, comporte des conduits d'air (4) et/ou des chambres à air (5) entre la feuille autocollante et le revêtement, dirigés vers le revêtement, qui subsistent après la pose du revêtement de sol ou subsistent en grande partie, le rapport entre la superficie des conduits d'air (4) et/ou des chambres à air (5) d'au moins une face par rapport à la superficie totale d'au moins une face étant au maximum de 30%, la face inférieure enduite d'une colle adhésive (3) présentant une moindre adhérence que l'adhérence de la couche de colle adhésive (2) de la face supérieure et des poids moyens d'application de colle différents étant prévus sur les deux faces pour obtenir des adhérences différentes, la face ayant la plus forte adhérence présentant un poids moyen d'application plus élevé et le poids moyen au moins sur la face supérieure à l'état sec étant situé dans la plage de 5 à 250 g/m² et étant au moins sur la face inférieure situé dans la plage de 5 à 100 g/m².

2. Utilisation selon la revendication 1, **caractérisée en ce que** les canaux d'air (4) et/ou les chambres à air (5) sont formés dans la couche de colle adhésive (2,3) d'au moins une face, des premières zones (6) avec une couche plus mince et/ou pas de couche alternant avec des deuxièmes zones (7) avec des couches de colle adhésive plus épaisses et les premières zones (6) formant les conduits d'air (4) et/ou les chambres à air (5).

3. Utilisation selon la revendication 1 ou 2, **caractérisée en ce que** les canaux d'air (4) et/ou les chambres à air (5) dans la couche de colle adhésive sont formés dans au moins une face, la couche de colle adhésive ayant de préférence une rugosité moyenne de Ra 1-300 µm, de manière plus préférée 5-200 µm, particulièrement préférée 10 - 150 µm, tout particulièrement préférée 15 -100 µm et de manière la plus préférée 20 - 75 µm, la rugosité moyenne étant obtenue de préférence par l'ajout de charges (8) grossières, avec une granulométrie moyenne préférée dans la plage de 0,1 à 10 fois, plus préférée 0,3 à 5 fois et particulièrement préférée de 0,5 à 3 fois l'épaisseur de la couche de colle adhésive d'au moins une face de la feuille autocollante.

4. Utilisation selon la revendication 1 à 3, **caractérisée en ce que** le rapport de la superficie des canaux d'air (4) et/ou des chambres à air (5) d'au moins une face par rapport à la superficie totale d'au moins une face est de préférence au maximum 20%, de manière particulièrement préférée 15% et de manière la plus préférée 10% au maximum.

5. Utilisation selon la revendication 1 à 4, **caractérisée en ce que** la largeur des conduits d'air (4) et/ou le diamètre des chambres à air (5) est au maximum de 15 mm ou au maximum de 10 mm, de préférence 5 mm au maximum, de manière plus préférée 3 mm, de manière encore plus préférée au maximum 1,5 mm, de manière particulièrement préférée 1 mm et de manière la plus préférée au maximum 0,5 mm.

6. Utilisation selon une des revendications 1 à 5, **caractérisée en ce que** les conduits d'air (4) et/ou les chambres à air (5) sont séparés par des écarts allant de 10 mm au minimum à 100 mm au maximum.

7. Utilisation selon une des revendications 1 ou 6, **caractérisée en ce que** la couche-support (1) et la couche de colle adhésive (2,3) sont perméables à la vapeur d'eau et la perméabilité à la vapeur d'eau (WDD) est de préférence supérieure à 2 g/(m2*d), de manière plus préférée supérieure à 5 g/(m2*d), de manière particulièrement préférée supérieure à 5 g/(m2*d) de manière la plus préférée 10 g/(m2*d) et de manière absolument préférée 20 g/(m2*d).

8. Utilisation selon la revendication 7, **caractérisée en ce que** la couche-support (1) et/ou la couche de colle adhésive (2,3) d'au moins une face est ou sont perforées, par des trous de perforation (9) qui sont répartis sur toute la surface avec un écart entre eux de préférence de moins de 10 cm et présentent une section de moins de 4mm².

9. Utilisation selon la revendication 8, **caractérisée en ce que** les trous de perforation (9) dans la couche-support (1) et la couche de colle adhésive (2,3) d'au moins une face sont alignés.

10. Utilisation selon la revendication 1 à 9, **caractérisée en ce que** la couche-support (1) au moins sur sa face inférieure est conçue pour ancrer la colle, est de préférence coronisée et/ou pourvue d'une couche de fond et/ou présente un promoteur d'adhérence coextrudé, la face d'ancrage de la colle se présentant de préférence sous forme de couche.

11. Utilisation selon la revendication 10, **caractérisée en ce que** la couche-support (1) est en un matériau favorisant l'ancrage de la colle.

12. Utilisation selon une des revendications 1 à 11, **caractérisée en ce que** la couche-support (1) présente au moins une portion servant de couche de freinage s'opposant au passage d'additifs et/ou plastifiants.

13. Utilisation selon la revendication 12, **caractérisée en ce que** la couche de freinage est pour l'essentiel la face d'ancrage de la colle.

14. Utilisation selon une des revendications 1 à 13, **caractérisée en ce que** la couche-support (1) est conçue pour être sensiblement plane sur sa face inférieure.

15. Utilisation selon une des revendications 1 à 14, **caractérisée en ce qu'**au moins la couche de colle adhésive (3) de la face inférieure est conçue pour être sensiblement plane.

16. Utilisation selon une des revendications 1 à 15, **caractérisée en ce que** le poids d'application de la colle au moins sur la face supérieure à l'état sec est de préférence situé dans la plage de 50 à 150 g/m² et de préférence au moins sur la face inférieure dans la plage de 10 à 80 g/m².

17. Utilisation selon une des revendications 1 à 16, **caractérisée en ce que** la couche de colle adhésive (2,3) est une dispersion à base d'acrylate, de préférence enrichie avec des résines contenant une protection UV et contre le vieillissement, ou aussi un matériau à base de solvant ou obtenu par réticulation par UV, par rayons électroniques ou réticulation thermique ou un matériau à base de colle thermofusible, matériau(x) de préférence diffusible(s) à la vapeur d'eau, au moins la couche de colle (2) sur la face supérieure étant de préférence une colle résistante aux plastifiants.

18. Utilisation selon une des revendications 1 à 17, **caractérisée en ce que** la couche de colle adhésive (2,3) est en deux colles différentes sur la face supérieure et inférieure respectivement.

19. Utilisation selon une des revendications 1 à 18, **caractérisée en ce que** la force d'adhérence d'au moins la face inférieure a un pouvoir adhésif (mesuré comme force de pelage selon DIN EN 1939, novembre 1996) situé dans une plage de 0,5 N/25 mm à 15 N/25 mm, de préférence entre 1,0 N/25 mm et 10 N/25 mm, de manière particulièrement préférée entre 2,0 N/25 mm et 8,0 N/25 mm et de manière tout particulièrement préférée entre 3,0 N/25 mm et 6,0 N/25 mm.

20. Utilisation selon une des revendications 1 à 19, **caractérisée en ce que** la force d'adhérence d'au moins la face supérieure a un pouvoir adhésif (mesuré comme force de pelage selon DIN EN 1939, novembre 1996) de plus de 2 N/25 mm, de préférence de plus de 5 N/25 mm, de manière particulièrement préférée de plus de 10 N/25 mm et de manière tout particulièrement préférée de plus de 20 N/25 mm.

21. Utilisation selon une des revendications 1 à 20, **caractérisée en ce qu'**un film de couverture détachable (10) est présent sur au moins une des deux faces, de préférence sur la face supérieure.

22. Utilisation selon la revendication 21, **caractérisée en ce que** le film de couverture détachable (10) est perforé avec des trous de perforation qui sont de préférence alignés avec les trous de perforation (9) de la couche-support (1) et/ou de la couche de colle adhésive (2,3) sur au moins une des faces.

23. Utilisation selon une des revendications 1 à 22, **caractérisée en ce que** la feuille autocollante est conçue pour une largeur minimale de 150 mm pour recouvrir sur une grande surface le plancher devant recevoir le revêtement de sol ou l'escalier ou l'affiche et que sa largeur est située dans une plage de 150 mm à 2000 mm, particulièrement dans une plage de 500 mm à 1 500 mm et plus particulièrement de 600 mm à 1000 mm, la largeur utilisée sur les escaliers étant en particulier de 200 mm à 250 mm et pour une utilisation sur planchers d'au moins 350 mm.

24. Utilisation selon une des revendications 1 à 23, **caractérisée en ce que** la couche-support a une épaisseur située dans une plage de 10 à 120 µm, de préférence dans une plage de 25 à 75µm, et de manière particulièrement préférée dans une plage de 50 à 70 µm.

25. Utilisation selon une des revendications 1 à 24, **caractérisée en ce que** la feuille autocollante est roulée en un rouleau.
